(19) Europäisches Patentamt / European Patent Office / Office européen des brevets

(11) **EP 1 907 911 B1**

(12) **FASCICULE DE BREVET EUROPEEN**

(45) Date de publication et mention
de la délivrance du brevet:
**26.08.2009 Bulletin 2009/35**

(21) Numéro de dépôt: **06794210.2**

(22) Date de dépôt: **25.07.2006**

(51) Int Cl.:
**G05D 1/06** *(2006.01)*    **G01C 21/00** *(2006.01)*

(86) Numéro de dépôt international:
**PCT/FR2006/001811**

(87) Numéro de publication internationale:
**WO 2007/012749 (01.02.2007 Gazette 2007/05)**

(54) **PROCEDE ET DISPOSITIF DE DETECTION D'UN RISQUE DE COLLISION D'UN AERONEF AVEC LE TERRAIN ENVIRONNANT**

VERFAHREN UND VORRICHTUNG ZUR ERKENNUNG DER KOLLISIONSGEFAHR EINES FLUGZEUGES MIT UMGEBUNGSGELÄNDE

METHOD AND DEVICE FOR DETECTING A RISK OF COLLISION OF AN AIRCRAFT WITH THE SURROUNDING TERRAIN

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **26.07.2005 FR 0507922**

(43) Date de publication de la demande:
**09.04.2008 Bulletin 2008/15**

(73) Titulaire: **AIRBUS France**
**31060 Toulouse (FR)**

(72) Inventeurs:
• **PITARD, Fabien**
**F-31000 Toulouse (FR)**
• **DEMORTIER, Jean-Pierre**
**F-32200 Maurens (FR)**
• **AUBRY, Florence**
**F-54210 Azelot (FR)**

(74) Mandataire: **Hauer, Bernard**
**Cabinet Bonnétat**
**29, Rue de Saint-Pétersbourg**
**F-75008 Paris (FR)**

(56) Documents cités:
**FR-A- 2 740 570          US-A- 3 396 391**
**US-A1- 2005 261 811**

**Description**

La présente invention concerne un procédé et un dispositif de détection d'un risque de collision d'un aéronef, en particulier d'un avion de transport, avec le terrain environnant.

On sait qu'un tel dispositif, par exemple de type TAWS ("Terrain Avoidance and Warning System en anglais", c'est-à-dire système d'alerte et d'évitement de terrain) ou de type GPWS ("Ground Proximity Warning System" en anglais, c'est-à-dire système d'alerte de proximité avec le sol), a pour objet de détecter tout risque de collision de l'aéronef avec le terrain environnant et d'alerter l'équipage lorsqu'un tel risque est détecté, de sorte que ce dernier puisse alors mettre en oeuvre une manoeuvre d'évitement du terrain. Un tel dispositif comporte généralement :

- un premier moyen connaissant un profil du terrain situé à l'avant de l'aéronef ;
- un deuxième moyen pour déterminer les valeurs effectives de paramètres de vol particuliers ;
- un troisième moyen pour calculer, à partir desdites valeurs effectives, une trajectoire d'évitement la plus représentative possible de la situation réelle, et pour vérifier si cette trajectoire d'évitement est compatible avec ledit profil du terrain, au moins sur une distance prédéterminée à l'avant de l'aéronef ; et
- un quatrième moyen pour émettre un signal d'alerte correspondant, si ledit troisième moyen détecte une incompatibilité.

Généralement, ledit troisième moyen utilise un modèle destiné à représenter une manoeuvre d'évitement réalisé par un aéronef, pour calculer la trajectoire correspondante (voir le document US2005/0261811). Toutefois, le modèle utilisé qui prend en compte en général un facteur de charge constant et une trajectoire fixée représentative d'un état stabilisé de l'aéronef, reproduit plus ou moins bien la manoeuvre réelle mise en oeuvre par l'aéronef. Aussi, les approximations réalisées rendent nécessaire la prise en compte de marges d'erreur importantes, afin de ne pas surestimer les performances réelles de l'aéronef lors d'une manoeuvre d'évitement. Or, la prise en compte de telles marges d'erreur peut notamment entraîner de fausses alertes. Le mode de calcul et le mode de vérification mis en oeuvre par ledit troisième moyen ne sont donc pas complètement fiables.

La présente invention concerne un procédé de détection d'un risque de collision d'un aéronef avec le terrain environnant, qui permet de remédier à ces inconvénients.

A cet effet, selon l'invention, ledit procédé, selon lequel on réalise, de façon automatique et répétitive, la suite d'étapes successives suivante :

a) on prend en compte un profil du terrain situé à l'avant de l'aéronef ;
b) on détermine les valeurs effectives de paramètres de vol particuliers ;
c) à partir de ces valeurs effectives, on détermine une trajectoire d'évitement comportant au moins une partie de ressource et une partie à pente constante, et on la projette à l'avant de l'aéronef ;
d) on vérifie si ladite trajectoire d'évitement est compatible avec ledit profil du terrain, au moins sur une distance prédéterminée à l'avant de l'aéronef ; et
e) si on détecte une incompatibilité à l'étape d), on émet un signal d'alerte correspondant,

est remarquable en ce que :

- à l'étape c) :

■ on calcule, à l'aide de valeurs effectives déterminées de certains desdits paramètres de vol particuliers, une variation de hauteur de l'aéronef qui est due à un transfert d'énergie et à une variation de pente totale engendrée par une réduction de vitesse, lors d'une manoeuvre d'évitement ; et
■ on utilise la variation de hauteur ainsi calculée pour déterminer une trajectoire d'évitement qui est la plus représentative possible de la réalité et qui comporte, entre la partie de ressource et la partie à pente constante, une partie intermédiaire qui tient compte de cette variation de hauteur ; et

- à l'étape d), on utilise la trajectoire d'évitement ainsi déterminée pour vérifier si cette trajectoire d'évitement est compatible avec ledit profil du terrain, sur ladite distance prédéterminée à l'avant de l'aéronef.

Ainsi, grâce à l'invention, on prend en compte une variation de hauteur de l'aéronef qui est due à un transfert d'énergie et à une variation de poussée lors de la manoeuvre d'évitement, ce qui permet d'optimiser le modèle utilisé lors de l'étape c) et précisé ci-dessous. Les traitements mis en oeuvre lors de cette étape c) sont donc adaptés pour être le plus proche possible de la réalité. Par conséquent, la détection d'un risque de collision avec le terrain prend en compte une manoeuvre d'évitement qui est très proche de la manoeuvre d'évitement effectivement mise en oeuvre le cas échéant par l'aéronef, ce qui permet notamment d'éviter de fausses alertes et d'obtenir une surveillance particulièrement fiable.

Dans un premier mode de réalisation, ladite variation de pente totale engendrée par une réduction de vitesse correspond à une variation de poussée.

Dans ce premier mode de réalisation, de façon avantageuse :

-   à l'étape b) :

   ■ on estime la masse effective GW de l'aéronef ;
   ■ on mesure la vitesse effective courante VO de l'aéronef ; et
   ■ on mesure la pente effective courante $\gamma$O de l'aéronef ; et

-   à l'étape c), on calcule ladite variation de hauteur $\Delta$H, à l'aide des expressions suivantes :

$$\begin{cases} \Delta H = [K1.(VO^2 - VF^2)/2.g + (K2.(VO - VF) + K3)/(GW - GWO)].f(x) \\ f(x) = f(X - XO ; VF; GW; {}_\gamma F - K5 {}_{\gamma O} \\ f(x) \in [0;1] \end{cases}$$

dans desquelles :

   ■ K1, K2, K3 et K5 sont des paramètres prédéterminés dépendant de l'aéronef ;
   ■ g représente l'accélération de la pesanteur ;
   ■ GWO représente une valeur constante prédéterminée de la masse de l'aéronef, dépendant dudit aéronef ;
   ■ VF représente une valeur constante de la vitesse correspondant à la vitesse stabilisée atteinte en fin de manoeuvre d'évitement, cette valeur étant prédéterminée et dépendant de l'aéronef ;
   ■ $\gamma$F représente une valeur constante de la pente de vol correspondant à la pente de vol par rapport au sol, stabilisée en fin de manoeuvre d'évitement, cette valeur étant prédéterminée et dépendant de l'aéronef et de paramètres d'état ;
   ■ X représente la position courante de l'aéronef sur un axe horizontal d'un plan vertical de symétrie de l'aéronef ; et
   ■ XO représente la position de l'aéronef, sur ledit axe horizontal dudit plan vertical, au début d'une phase de variation de hauteur de ladite manoeuvre d'évitement.

En outre, dans un second mode de réalisation, à l'étape c), on calcule ladite variation de hauteur, pas à pas, en faisant la somme :

-   d'une premières variation de hauteur qui représente l'échange d'énergie cinétique en énergie potentielle provoquée par la décélération ; et
-   d'une seconde variation de hauteur qui représente la pente totale du pas considéré.

Par ailleurs, pour optimiser une phase initiale de ressource de la manoeuvre d'évitement, de façon avantageuse :

-   à l'étape c) :

   ■ on calcule, à l'aide de valeurs effectives déterminées de certains desdits paramètres de vol particuliers, un facteur de charge qui est représentatif d'une phase de ressource de la manoeuvre d'évitement ; et
   ■ on utilise le facteur de charge ainsi calculé pour déterminer une partie de ressource de la trajectoire d'évitement, qui est la plus représentative possible de la réalité ; et

-   à l'étape d), on utilise la partie de ressource ainsi déterminée pour vérifier si la trajectoire d'évitement est compatible avec ledit profil du terrain, sur ladite distance prédéterminée à l'avant de l'aéronef.

Dans ce cas, de préférence,

- à l'étape b) :

  ■ on estime la masse effective GW de l'aéronef ; et
  ■ on mesure la vitesse effective courante VO de l'aéronef ; et

- à l'étape c), on calcule ledit facteur de charge Nz, à l'aide de l'expression suivante :

$$Nz = n0 + (n1.GW) + (n2.VO)$$

dans laquelle n0, n1 et n2 sont des paramètres prédéterminés.

Dans un mode de réalisation particulier, au moins certains desdits paramètres prédéterminés et le cas échéant desdites valeurs constantes dépendent de la configuration de vol effective de l'aéronef. Ceci permet d'améliorer la représentativité de la manoeuvre d'évitement modélisée, par rapport à la manoeuvre d'évitement susceptible d'être effectivement réalisée par l'aéronef.

La présente invention concerne également un dispositif de détection automatique d'un risque de collision d'un aéronef avec le terrain environnant, ledit dispositif comportant :

- un premier moyen connaissant un profil du terrain situé à l'avant de l'aéronef ;
- un deuxième moyen pour déterminer les valeurs effectives de paramètres de vol particuliers ;
- un troisième moyen pour calculer, à partir desdites valeurs effectives, une trajectoire d'évitement, et pour vérifier si ladite trajectoire d'évitement est compatible avec ledit profil du terrain, au moins sur une distance prédéterminée à l'avant de l'aéronef ; et
- un quatrième moyen pour émettre un signal d'alerte correspondant, si ledit troisième moyen détecte une incompatibilité.

Selon l'invention, ledit dispositif est remarquable en ce que ledit troisième moyen comporte au moins :

- un premier élément pour calculer, à l'aide de valeurs effectives déterminées de certains desdits paramètres de vol particuliers, une variation de hauteur de l'aéronef qui est due à un transfert d'énergie et à une variation de poussée engendrée par une réduction de vitesse, lors d'une manoeuvre d'évitement ;
- un deuxième élément pour utiliser la variation de hauteur calculée par ledit premier élément, afin de déterminer une trajectoire d'évitement la plus représentative possible de la réalité ; et
- un troisième élément pour utiliser la trajectoire d'évitement déterminée par ledit deuxième élément, afin de vérifier si cette trajectoire d'évitement est compatible avec ledit profil du terrain, sur ladite distance prédéterminée à l'avant de l'aéronef.

Dans un mode de réalisation particulier, ledit troisième moyen comporte de plus :

- un quatrième élément pour calculer, à l'aide de valeurs effectives déterminées de certains desdits paramètres de vol particuliers, un facteur de charge qui est représentatif d'une phase de ressource de la manoeuvre d'évitement ;
- un cinquième élément (correspondant par exemple audit deuxième élément précité) pour utiliser le facteur de charge calculé par ledit quatrième élément, afin de déterminer une partie de ressource de la trajectoire d'évitement, qui est la plus représentative possible de la réalité ; et
- un sixième élément (correspondant par exemple audit troisième élément précité) pour utiliser cette partie de ressource déterminée par ledit cinquième élément, afin de vérifier si ladite trajectoire d'évitement est compatible avec ledit profil du terrain, sur ladite distance prédéterminée à l'avant de l'aéronef.

Les figures du dessin annexé feront bien comprendre comment l'invention peut être réalisée. Sur ces figures, des références identiques désignent des éléments semblables.

La figure 1 est le schéma synoptique d'un dispositif conforme à l'invention.
La figure 2 illustre schématiquement une manoeuvre de ressource prise en compte dans la présente invention.
La figure 3 est un graphique permettant d'illustrer des caractéristiques essentielles de la présente invention.

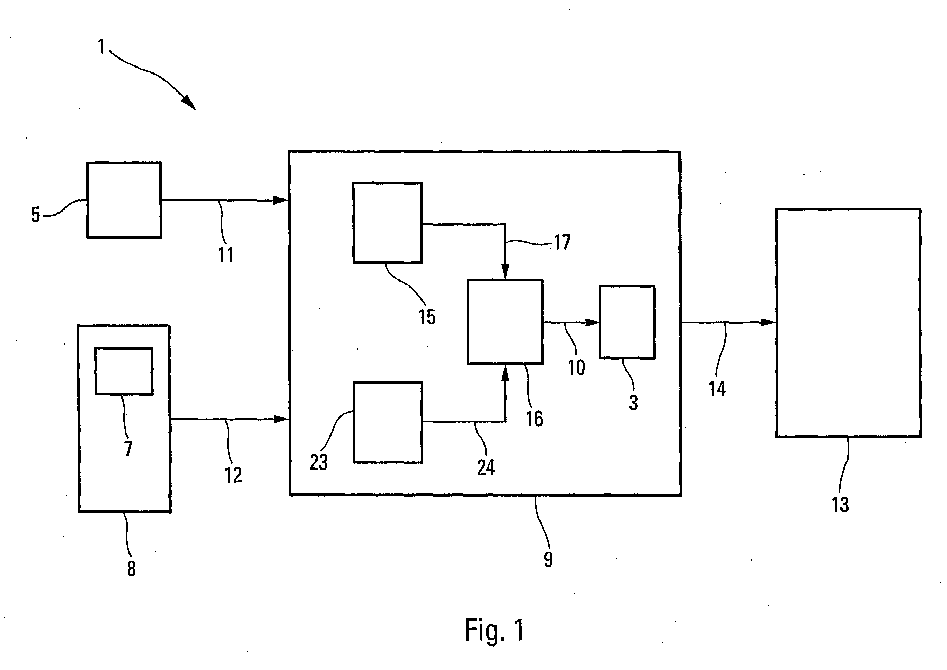

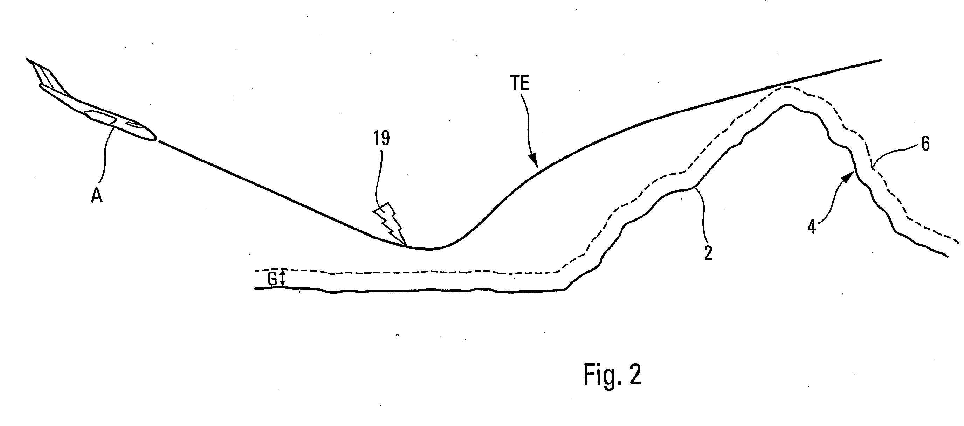

Le dispositif 1 conforme à l'invention et représenté schématiquement sur la figure 1 a pour objet de détecter automatiquement tout risque de collision d'un aéronef A, en particulier d'un avion de transport militaire, avec le terrain 2 environnant et d'avertir l'équipage de l'aéronef A lorsqu'un tel risque est détecté, de sorte que ce dernier puisse alors mettre en oeuvre une manoeuvre TE d'évitement du terrain 2, comme représenté sur la figure 2.

Un tel dispositif 1, par exemple de type TAWS ("Terrain Avoidance and Warning System" en anglais, c'est-à-dire système d'alerte et d'évitement de terrain) ou de type GPWS ("Ground Proximity Warning System" en anglais, c'est-à-dire système d'alerte de proximité avec le sol), qui est embarqué sur l'aéronef A, comporte de façon usuelle :

- un moyen 5 qui connaît le profil de terrain 6 au moins à l'avant de l'aéronef A et qui comporte à cet effet par exemple une base de données contenant ledit profil de terrain 6 et/ou un moyen de détection du terrain tel qu'un radar. Ledit profil de terrain 6 se trouve par exemple à une hauteur de garde G prédéterminée, au-dessus du relief 4 ;
- un moyen 7 précisé ci-après et faisant par exemple partie d'un ensemble 8 de sources d'informations, qui a pour objet de déterminer les valeurs effectives d'une pluralité de paramètres de vol particuliers également précisés ci-dessous ;
- une unité centrale 9 qui est reliée par l'intermédiaire de liaisons 11 et 12 respectivement auxdits moyens 5 et 7, et qui a pour objet de calculer une trajectoire d'évitement à partir desdites valeurs effectives de paramètres de vol particuliers déterminées par ledit moyen 7, de projeter cette trajectoire d'évitement à l'avant de l'aéronef A, et de vérifier si ladite trajectoire d'évitement ainsi projetée à l'avant est compatible avec ledit profil de terrain 6, au moins sur une distance prédéterminée (par exemple 10 000 mètres) à l'avant de l'aéronef A ; et
- un moyen 13 qui est relié par l'intermédiaire d'une liaison 14 à ladite unité centrale 9, pour émettre un signal d'alerte (sonore et/ou visuel) en cas de détection d'un risque de collision par ladite unité centrale 9.

Selon l'invention, ladite unité centrale 9 comporte :

- un élément 15 pour calculer, à l'aide de valeurs effectives (déterminées par ledit moyen 7) de certains desdits paramètres de vol particuliers, comme précisé ci-dessous, une variation de hauteur ΔH de l'aéronef A qui est due à un transfert d'énergie et à une variation de pente totale engendrée par une réduction de vitesse, lors d'une manoeuvre d'évitement mise en oeuvre pour éviter un terrain 2 à l'avant de l'aéronef A ; et
- un élément 16 qui est relié par une liaison 17 audit élément 15, pour utiliser la variation de hauteur ΔH calculée par ce dernier, dans le but de déterminer une trajectoire d'évitement la plus représentative possible de la réalité ; et
- un élément 3 qui est relié par une liaison 10 audit élément 16, pour utiliser la trajectoire d'évitement déterminée par ce dernier, dans le but de vérifier si ladite trajectoire d'évitement est compatible avec ledit profil de terrain 6, sur ladite distance prédéterminée à l'avant de l'aéronef A.

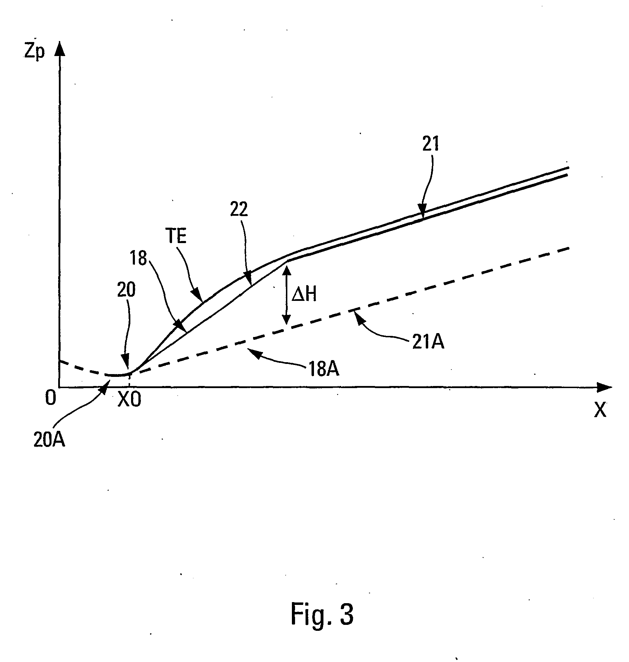

Pour ce faire, ledit élément 3 utilise une courbe d'assistance 18 (ou courbe d'évitement) qui est calculée par l'élément 16, qui est représentée sur la figure 3 et qui est sensée reproduire une manoeuvre d'évitement. Ledit élément 3 fait se déplacer cette courbe d'assistance 18 rectilignement devant l'aéronef A et il vérifie qu'elle ne rencontre pas le profil de terrain 6 à l'avant de la position actuelle de l'aéronef A, au moins sur ladite distance prédéterminée. Ainsi, tant que ladite courbe d'assistance 18 ainsi déplacée ne rencontre pas le profil de terrain 6, l'aéronef A est en mesure de survoler le relief 4 du terrain 2 qui se trouve devant lui.

Toutefois, lorsque lors du déplacement de la courbe d'assistance 18, ladite courbe d'assistance 18 rencontre le profil de terrain 6, il existe un risque de collision avec ce dernier de sorte que l'élément 3 ordonne alors au moyen 13 d'émettre un signal d'alerte, comme illustré par un symbole 19 sur la figure 2. A ce moment, le pilote ou un système de guidage automatique fait suivre à l'aéronef A une trajectoire d'évitement TE destinée à permettre audit aéronef A de survoler le relief 4 du terrain 2 qui se trouve devant lui et d'éviter ainsi une collision.

Jusqu'à présent, une courbe d'assistance 18A usuelle (destinée à reproduire une manoeuvre d'évitement) comportait, comme représenté partiellement en traits interrompus sur la figure 3 :

- une première partie 20A (ou partie de ressource) représentative d'une phase de redressement (ou ressource) de la manoeuvre d'évitement et destinée à permettre à l'aéronef A de reprendre de l'altitude. Cette partie de ressource 20A était construite usuellement, en prenant en compte un facteur de charge constant de l'aéronef A de manière à correspondre à un arc de cercle à rayon constant ; et
- une partie 21 A à pente constante, qui suit tangentiellement cette partie de ressource 20A.

Une telle courbe d'assistance 18A usuelle ne reproduit pas exactement la manoeuvre d'évitement réellement effectuée par l'aéronef A le cas échéant, ce qui peut notamment entraîner de fausses alertes (relatives à un risque de collision).

La courbe d'assistance 18 conforme à l'invention permet de remédier à cet inconvénient, en reproduisant de façon optimisée la manoeuvre d'évitement réellement effectuée par l'aéronef A. A cet effet, selon l'invention, ladite courbe d'assistance 18 comporte, en plus d'une partie de ressource 20 particulière précisée ci-dessous et d'une partie 21 usuelle à pente constante, une partie intermédiaire 22 prenant en compte la variation de hauteur ΔH précitée. Cette courbe d'assistance 18 tient donc compte d'une augmentation dynamique de l'altitude, à partir de la fin de ladite partie de ressource 20 et ceci jusqu'au début de ladite partie 21 à pente constante (qui est donc décalée verticalement vers le haut de ladite variation de hauteur ΔH, par rapport à la partie 21 A usuelle précitée).

Pour ce faire, ledit moyen 7 comporte des éléments non représentés spécifiquement, pour respectivement :

- estimer la masse effective GW de l'aéronef A ;
- mesurer la vitesse effective courante VO de l'aéronef A ; et
- mesurer la pente effective courante γO (par rapport au sol) de l'aéronef A.

De plus, dans un premier mode de réalisation, pour lequel la variation de pente totale précitée correspond à une variation de poussée, ledit élément 15 détermine ladite variation de hauteur ΔH, à l'aide des valeurs effectives précédentes et des expressions suivantes :

$$
\begin{cases}
\Delta H = [K1.(VO^2 - VF^2)/2.g + (K2.(VO - VF) + K3)/(GW - GWO)].f(x) \\
f(x) = f(X - XO\,;\,VF\,;\,GW\,;\,\gamma F - K5\,\gamma O = (X - XO)/[K4.GW.VF.(\gamma F - K5.\gamma0)] \\
f(x) \in [0\,;\,1]
\end{cases}
$$

dans lesquelles :

- K1, K2, K3, K4 et K5 sont des paramètres prédéterminés dépendant de l'aéronef A ;
- g représente l'accélération de la pesanteur ;
- GWO représente une valeur constante prédéterminée de la masse de l'aéronef A, dépendant dudit aéronef A ;
- VF représente une valeur constante de la vitesse correspondant à la vitesse stabilisée atteinte en fin de manoeuvre d'évitement, cette valeur étant prédéterminée et dépendant de l'aéronef A ;
- γF représente une valeur constante de la pente de vol correspondant à la pente de vol par rapport au sol, stabilisée en fin de manoeuvre d'évitement, cette valeur étant prédéterminée et dépendant de l'aéronef A et de paramètres d'état ;
- X représente la position courante de l'aéronef A sur un axe horizontal OX d'un plan vertical OXZp de symétrie de l'aéronef A ; et
- XO représente la position de l'aéronef A, sur ledit axe horizontal OX dudit plan vertical OXZp, au début d'une phase de variation de hauteur de ladite manoeuvre d'évitement, comme illustré sur la figure 3.

Cette variation de hauteur ΔH est due, comme indiqué précédemment, à un transfert d'énergie (entraînant une variation de hauteur ΔH1) et à une variation de poussée (entraînant une variation de hauteur ΔH2) : ΔH=ΔH1 + ΔH2.

La variation de hauteur ΔH1 illustre une transformation de l'énergie cinétique en énergie potentielle :

$$
\Delta H1 = K1.(VO^2 - VF^2)/2.g.
$$

De plus, dans ce premier mode de réalisation, la variation de hauteur ΔH2 est due à une variation de poussée, qui est engendrée par une réduction de vitesse.

En outre, dans un second mode de réalisation, pour lequel la variation de hauteur ΔH est due à un transfert d'énergie et à une variation de pente totale engendrée par une réduction de vitesse, ladite variation de hauteur ΔH est fonction de la pente géométrique γ :

$$
\Delta H \approx \int \gamma.dx
$$

Or, cette pente géométrique est égale à la somme de la pente totale γTOT et d'un terme d'accélération :

$$\gamma = \gamma TOT - (dVSOL / dt) / g$$

La pente totale est égale au bilan propulsif, c'est-à-dire à la différence entre la poussée et la traînée sur la masse :

$$\gamma TOT \approx (P - T) / m.g$$

Cette pente totale $\gamma TOT$ contribue à une augmentation de hauteur $\gamma H$, car elle augmente quand la vitesse diminue. Cette augmentation de pente totale, inversement proportionnelle à la vitesse, est due à l'augmentation de la poussée inversement proportionnelle à la vitesse.

En effet, ce phénomène physique est particulièrement accentué sur un turbopropulseur où le terme prépondérant de la poussée s'exprimes par :

$$P \approx Puissance\text{-}utile / V$$

La variation de hauteur $\Delta H$ peut donc être calculée par l'élément 15, dans ce second mode de réalisation, pas à pas, comme la somme de deux contributions :

- $\Delta H3$, qui représente l'échange d'énergie cinétique en énergie potentielle provoquée par la décélération ; et
- $\Delta H4$, qui représente la pente totale du pas considéré,
  c'est-à-dire :

$$\Delta H = \Delta H3 + \Delta H4$$

avec pour un pas $\underline{i}$

$$\begin{cases} \Delta H3 = (V_{i+1}{}^2 - V_i{}^2) / 2.g \\ \Delta H4 = tg(\gamma TOT).\Delta xi \end{cases}$$

Par ailleurs, selon l'invention, ladite unité centrale 9 comporte de plus :

- un élément 23 pour calculer, à l'aide des valeurs effectives de la masse GW et de la vitesse VO de l'aéronef A (déterminées par ledit moyen 7), un facteur de charge Nz qui est représentatif du facteur de charge réel de l'aéronef A, lors de la phase de ressource d'une manoeuvre d'évitement réellement effectuée par l'aéronef A ; et
- un élément supplémentaire, par exemple l'élément 16 qui est relié par une liaison 24 audit élément 23, pour utiliser ledit facteur de charge Nz (à la place d'un facteur de charge constant prédéterminé, utilisé jusqu'à présent) dans le but d'optimiser ladite partie de ressource 20 de la courbe d'assistance 18. Ce facteur de charge Nz est pris en compte pour calculer, de façon usuelle, le rayon de l'arc de cercle formant cette partie de ressource 20.

Dans un mode de réalisation particulier, ledit élément 23 détermine ledit facteur de charge Nz, à l'aide de l'expression suivante :

$$Nz = n0 + (n1.GW) + (n2.VO)$$

dans laquelle n0, n1 et n2 sont des paramètres prédéterminés.

Ce facteur de charge Nz est plus proche de la réalité qu'un facteur de charge constant utilisé dans l'état de la technique, ce qui permet d'augmenter la conformité de la partie de ressource 20 de la courbe d'assistance 18.

La trajectoire d'évitement TE effectivement suivie par l'aéronef A, en cas de détection d'un risque de collision par le dispositif 1 et de déclenchement d'une manoeuvre d'évitement, est ainsi reproduite fidèlement par la courbe d'assistance 18 déterminée conformément à la présente invention, comme illustré sur la figure 3.

Par conséquent, la détection d'un risque de collision avec le terrain 2 mise en oeuvre par le dispositif 1, prend en compte une manoeuvre d'évitement (sous forme de la courbe d'assistance 18) qui est très proche d'une manoeuvre d'évitement effectivement mise en oeuvre le cas échéant par l'aéronef A, ce qui permet notamment d'éviter de fausses alertes et ainsi d'obtenir une surveillance particulièrement fiable.

Dans un mode de réalisation particulier, au moins certains desdits paramètres prédéterminés n0, n1, n2, K1, K2 et K3 ou desdites valeurs constantes GWO, VF et $\gamma$F (enregistrés dans l'unité centrale 9 ou dans l'ensemble 8 de sources d'informations) dépendent de la configuration de vol effective de l'aéronef A. Dans ce cas, l'ensemble 8 de sources d'informations comportent des moyens destinés à mesurer des paramètres permettant de déterminer la configuration de vol courante de l'aéronef A, qui dépend par exemple de la phase de vol, de la configuration aérodynamique (becs, volets) de l'aéronef A, de son altitude ...

**Revendications**

1. Procédé de détection d'un risque de collision d'un aéronef (A) avec le terrain (2) environnant, procédé selon lequel on réalise, de façon automatique et répétitive, la suite d'étapes successives suivante :

   a) on prend en compte un profil (6) du terrain (2) situé à l'avant de l'aéronef (A) ;
   b) on détermine les valeurs effectives de paramètres de vol particuliers ;
   c) à partir de ces valeurs effectives, on détermine une trajectoire d'évitement comportant au moins une partie de ressource et une partie à pente constante, et on la projette à l'avant de l'aéronef (A) ;
   d) on vérifie si ladite trajectoire d'évitement est compatible avec ledit profil (6) du terrain (2), au moins sur une distance prédéterminée à l'avant de l'aéronef (A) ; et
   e) si on détecte une incompatibilité à l'étape d), on émet un signal d'alerte (19) correspondant,
   **caractérisé en ce que :**

   - à l'étape c) :

      ■ on calcule, à l'aide de valeurs effectives déterminées de certains desdits paramètres de vol particuliers, une variation de hauteur ($\Delta$H) de l'aéronef (A) qui est due à un transfert d'énergie et à une variation de pente totale engendrée par une réduction de vitesse, lors d'une manoeuvre d'évitement ; et
      ■ on utilise la variation de hauteur ($\Delta$H) ainsi calculée pour déterminer une trajectoire d'évitement qui est la plus représentative possible de la réalité et qui comporte, entre la partie de ressource et la partie à pente constante, une partie intermédiaire qui tient compte de cette variation de hauteur ($\Delta$H) ; et

   - à l'étape d), on utilise la trajectoire d'évitement ainsi déterminée pour vérifier si cette trajectoire d'évitement est compatible avec ledit profil (6) du terrain (2), sur ladite distance prédéterminée à l'avant de l'aéronef (A).

2. Procédé selon la revendication 1,
   **caractérisé en ce que** ladite variation de pente totale engendrée par une réduction de vitesse correspond à une variation de poussée.

3. Procédé selon la revendication 2,
   **caractérisé en ce que :**

   - à l'étape b) :

      ■ on estime la masse effective GW de l'aéronef (A) ;
      ■ on mesure la vitesse effective courante VO de l'aéronef (A) ; et
      ■ on mesure la pente effective courante $\gamma$O de l'aéronef (A) ; et

   - à l'étape c), on calcule ladite variation de hauteur $\Delta$H, à l'aide des expressions suivantes :

$$\left\{ \begin{array}{l} \Delta H = [K1.(VO^2 - VF^2)/2.g + (K2.(VO - VF) + K3)/(GW - GWO)].f(x) \\ f(x) = f(X - XO \; ; VF \; ; GW \; ; \gamma^F - K5 \gamma O \\ f(x) \in [0 \; ; 1] \end{array} \right. \quad .$$

dans lesquelles

■ K1, K2, K3 et K5 sont des paramètres prédéterminés dépendant de l'aéronef (A) ;
■ g représente l'accélération de la pesanteur ;
■ GWO représente une valeur constante prédéterminée de la masse de l'aéronef (A), dépendant dudit aéronef (A) ;
■ VF représente une valeur constante de la vitesse correspondant à la vitesse stabilisée atteinte en fin de manoeuvre d'évitement, cette valeur étant prédéterminée et dépendant de l'aéronef (A) ;
■ γF représente une valeur constante de la pente de vol correspondant à la pente de vol par rapport au sol, stabilisée en fin de manoeuvre d'évitement, cette valeur étant prédéterminée et dépendant de l'aéronef (A) et de paramètres d'état ;
■ X représente la position courante de l'aéronef (A) sur un axe horizontal (OX) d'un plan vertical (OXZp) de symétrie de l'aéronef (A) ; et
■ XO représente la position dé l'aéronef (A), sur ledit axe horizontal (OX) dudit plan vertical (OXZp), au début d'une phase de variation de hauteur de ladite manoeuvre d'évitement.

**4.** Procédé selon la revendication 1,
**caractérisé en ce qu'**à l'étape c), on calcule ladite variation de hauteur (ΔH), pas à pas, en faisant la somme :

- d'une première variation de hauteur qui représente l'échange d'énergie cinétique en énergie potentielle provoquée par la décélération ; et
- d'une seconde variation de hauteur qui représente la pente totale du pas considéré.

**5.** Procédé selon l'une quelconque des revendications précédentes,
**caractérisé en ce que :**

- à l'étape c) :

■ on calcule, à l'aide de valeurs effectives déterminées de certains desdits paramètres de vol particuliers, un facteur de charge qui est représentatif d'une phase de ressource de la manoeuvre d'évitement ; et
■ on utilise le facteur de charge ainsi calculé pour déterminer une partie de ressource de la trajectoire d'évitement, qui est la plus représentative possible de la réalité ; et

- à l'étape d), on utilise la partie de ressource ainsi déterminée pour vérifier si la trajectoire d'évitement est compatible avec ledit profil (6) du terrain (2), sur ladite distance prédéterminée à l'avant de l'aéronef (A).

**6.** Procédé selon la revendication 5,
**caractérisé en ce que :**

- à l'étape b) :

■ on estime la masse effective GW de l'aéronef (A) ; et
■ on mesure la vitesse effective courante VO de l'aéronef (A) ; et

- à l'étape c), on calcule ledit facteur de charge Nz, à l'aide de l'expression suivante :

$$Nz = n0 + (n1.GW) + (n2.VO)$$

dans laquelle n0, n1 et n2 sont des paramètres prédéterminés.

7.  Procédé selon l'une des revendications 3 à 6,
    **caractérisé en ce qu'**au moins certains desdits paramètres prédéterminés et le cas échéant desdites valeurs constantes dépendent de la configuration de vol effective de l'aéronef (A).

8.  Dispositif de détection d'un risque de collision d'un aéronef (A) avec le terrain (2) environnant, ledit dispositif (1) comportant :

    - un premier moyen (5) connaissant un profil (6) du terrain (2) situé à l'avant de l'aéronef (A) ;
    - un deuxième moyen (7) pour déterminer les valeurs effectives de paramètres de vol particuliers ;
    - un troisième moyen (9) pour calculer, à partir desdites valeurs effectives, une trajectoire d'évitement, et pour vérifier si ladite trajectoire d'évitement est compatible avec ledit profil (6) du terrain (2), au moins sur une distance prédéterminée à l'avant de l'aéronef (A) ; et
    - un quatrième moyen (13) pour émettre un signal d'alerte (19) correspondant, si ledit troisième moyen (9) détecte une incompatibilité,
    **caractérisé en ce que** ledit troisième moyen (9) comporte au moins :
    - un premier élément (15) pour calculer, à l'aide de valeurs effectives déterminées de certains desdits paramètres de vol particuliers, une variation de hauteur ($\Delta H$) de l'aéronef (A) qui est due à un transfert d'énergie et à une variation de pente totale engendrée par une réduction de vitesse, lors d'une manoeuvre d'évitement ;
    - un deuxième élément (16) pour utiliser la variation de hauteur ($\Delta H$) calculée par ledit premier élément (15), afin de déterminer une trajectoire d'évitement la plus représentative possible de la réalité ; et
    - un troisième élément (3) pour utiliser la trajectoire d'évitement déterminée par ledit deuxième élément (16), afin de vérifier si cette trajectoire d'évitement est compatible avec ledit profil (6) du terrain (2), sur ladite distance prédéterminée à l'avant de l'aéronef (A).

9.  Dispositif selon la revendication 8,
    **caractérisé en ce que** ledit troisième moyen (9) comporte de plus :

    - un quatrième élément (23) pour calculer, à l'aide de valeurs effectives déterminées de certains desdits paramètres de vol particuliers, un facteur de charge qui est représentatif d'une phase de ressource de la manoeuvre d'évitement ;
    - un cinquième élément (16) pour utiliser le facteur de charge calculé par ledit quatrième élément (23), afin de déterminer une partie de ressource de la trajectoire d'évitement, qui est la plus représentative possible de la réalité ; et
    - un sixième élément (3) pour utiliser cette partie de ressource déterminée par ledit cinquième élément (16), afin de vérifier si ladite trajectoire d'évitement est compatible avec ledit profil (6) du terrain (2), sur ladite distance prédéterminée à l'avant de l'aéronef (A).

10. Aéronef,
    **caractérisé en ce qu'**il comporte un dispositif (1) susceptible de mettre en oeuvre le procédé spécifié sous l'une quelconque des revendications 1 à 7.

11. Aéronef,
    **caractérisé en ce qu'**il comporte un dispositif (1) tel que celui spécifié sous l'une des revendications 8 et 9.


**Claims**

1.  A method for detecting a risk of collision of an aircraft (A) with the surrounding terrain (2) according to which method the following series of successive steps is carried out automatically and repetitively:

    a profile (6) of the terrain (2) located in front of the aircraft (A) is taken into account;
    the effective values of particular flight parameters are determined;
    from these effective values, an avoidance path comprising at least a pull-out part and a constant slope part is determined and it is projected in front of the aircraft (A);
    it is checked if said avoidance path is compatible with said profile (6) of the terrain (2), at least over a predetermined distance in front of the aircraft (A); and

if an incompatibility is detected in step d), a
corresponding warning signal (19) is transmitted,
**characterized in that:**

in step c):

there is calculated, using determined effective values of certain of said particular flight parameters, a height variation ($\Delta$H) of the aircraft (A) which is due to a transfer of energy and a total slope variation generated by a speed reduction during an avoidance maneuver; and

the height variation ($\Delta$H) thus calculated is used for determining an avoidance path which is the best possible representation of reality and which comprises, between the pull-out part and the part at constant slope, an intermediate part which takes account of this height variation ($\Delta$H); and

in step d), the avoidance path thus determined is used to check if that avoidance path is compatible with said profile (6) of the terrain (2) over said predetermined distance in front of the aircraft (A).

2. The method as claimed in claim 1, **characterized in that** said total slope variation generated by a speed reduction corresponds to a thrust variation.

3. The method as claimed in claim 2, **characterized in that:**

in step b):

the effective mass GW of the aircraft (A) is estimated;
the current effective speed VO of the aircraft (A) is measured; and
the current effective slope $\gamma$O of the aircraft (A) is measured; and
in step c), there is calculated said height variation $\Delta$H, using the following equations:

$$\Delta H = [K1.(VO2-VF2)/2.g+(K2.(VO-VF)+K3)/(GW-GWO)].f(x)$$

$$f(x) = f(X-XO; VF; GW; \gamma F-K5.\gamma O)$$

$$f(x) \in [O;1]$$

in which:

K1, K2, K3 and K5 are predetermined parameters depending on the aircraft (A);
g represents the acceleration of gravity;
GWO represents a predetermined constant value of the mass of the aircraft (A), dependent on said aircraft (A);
VF represents a constant value of the speed corresponding to the stabilized speed reached at the end of the avoidance maneuver, this value being predetermined and dependent on the aircraft (A);
$\gamma$F represents a constant value of the flight slope corresponding to the flight slope with respect to the ground, stabilized at the end of the avoidance maneuver, this value being predetermined and dependent on the aircraft (A) and on status parameters;
X represents the current position of the aircraft (A) on a horizontal axis (OX) of a vertical plane (OXZp) of symmetry of the aircraft (A); and
XO represents the position of the aircraft (A), on said horizontal axis (OX) of said vertical plane (OXZp), at the start of a height variation phase of said avoidance maneuver.

4. The method as claimed in claim 1, **characterized in that,** in step c), said height variation ($\Delta$H) is calculated, step by step, by producing the sum:

of a first height variation which represents the conversion of kinetic energy into potential energy provoked by the deceleration; and
and of a second height variation which represents the total slope of the step in question.

5. The method as claimed in any one of the preceding claims, **characterized in that:**

in step c):

there is calculated, using determined effective values of certain of said particular flight parameters, a load factor which is representative of a pull-out phase of the avoidance maneuver; and
the load factor thus calculated is used to determine a pull-out part of the avoidance path, which is the best possible representation of reality; and
in step d), the pull-out part thus determined is used to check if the avoidance path is compatible with said profile (6) of the terrain (2), over said predetermined distance in front of the aircraft (A).

6. The method as claimed in claim 5, **characterized in that:**

in step b):

the effective mass GW of the aircraft (A) is estimated; and
the current effective speed VO of the aircraft (A) is measured; and
in step c), said load factor Nz is calculated using the following expression:

$$Nz = n0 + (n1.GW) + (n2.VO)$$

in which n0, n1 and n2 are predetermined parameters.

7. The method as claimed in one of claims 3 to 6, **characterized in that** at least certain of said predetermined parameters and if necessary said constant values depend on the effective flight configuration of the aircraft (A).

8. A device for detecting a risk of collision of an aircraft (A) with the surrounding terrain (2), said device (1) comprising:

a first means (5) knowing a profile (6) of the terrain (2) located in front of the aircraft (A);
a second means (7) for determining the effective values of particular flight parameters;
a third means (9) for calculating, from said effective values, an avoidance path, and for checking if said avoidance path is compatible with said profile (6) of the terrain (2), at least over a predetermined distance in front of the aircraft (A); and
a fourth means (13) for transmitting a corresponding warning signal (19), if said third means (9) detects an incompatibility,

**characterized in that** said third means (9) comprises at least:

a first unit (15) for calculating, using determined effective values of some of said particular flight parameters, a height variation ($\Delta$H) of the aircraft (A) which is due to a transfer of energy and to a variation in total slope generated by a speed reduction, during an avoidance maneuver;
a second unit (16) for using the height variation ($\Delta$H) calculated by said first unit (15), in order to determine an avoidance path that is the best possible representation of reality; and
a third unit (3) for using the avoidance path determined by said second unit (16) in order to check if this avoidance path is compatible with said profile (6) of the terrain (2), over said predetermined distance in front of the aircraft (A).

9. The device as claimed in claim 8, **characterized in that** said third means (9) furthermore comprises:

a fourth unit (23) for calculating, using determined effective values of certain of said particular flight parameters, a load factor which is representative of a pull-out phase of the avoidance maneuver;
a fifth unit (16) for using the load factor, calculated by said fourth unit (23), in order to determine a pull-out part of the avoidance path, which is the best possible representation of reality; and
a sixth unit (3) for using this pull-out part, determined by said fifth unit (16), in order to check if said avoidance path is compatible with said profile (6) of the terrain (2), over said predetermined distance in front of the aircraft (A).

10. An aircraft, **characterized in that** it comprises a device (1) able to implement the method as claimed in any one of claims 1 to 7.

11. An aircraft, **characterized in that** it comprises a device (1) as claimed in one of claims 8 and 9.

**Patentansprüche**

1. Verfahren zur Erkennung der Gefahr einer Kollision eines Flugzeugs (A) mit dem Umgebungsgelände (2), wobei bei dem Verfahren automatisch und wiederholt die nachfolgend genannte Folge von aufeinanderfolgenden Verfahrensschritten ausgeführt wird:

a) ein Profil (6) des vor dem Flugzeug (A) liegenden Geländes (2) wird berücksichtigt,
b) die Istwerte von besonderen Flugparametern werden bestimmt,
c) aus diesen Istwerten wird eine Ausweichflugbahn, die mindestens einen Abfangabschnitt und einen Abschnitt mit konstanter Steigung umfasst, bestimmt und vor das Flugzeug (A) projiziert,
d) es wird überprüft, ob die Ausweichflugbahn mindestens über eine vorherbestimmte Distanz vor dem Flugzeug (A) mit dem Profil (6) des Geländes (2) vereinbar ist und
e) wenn in Schritt d) eine Unvereinbarkeit detektiert wird, wird ein entsprechendes Warnsignal (19) abgegeben, **dadurch gekennzeichnet, dass:**

   - in Schritt c):

      • anhand von bestimmten Istwerten von einigen der besonderen Flugparameter eine Höhenänderung (ΔH) des Flugzeugs (A) berechnet wird, die bedingt ist durch eine Energieübertragung und eine Gesamtsteigungsänderung, welche von einer Geschwindigkeitsverringerung bei einem Ausweichmanöver hervorgerufen wird und
      • die auf diese Weise berechnete Höhenänderung (ΔH) verwendet wird, um eine Ausweichflugbahn zu bestimmen, welche die Realität bestmöglich repräsentiert und welche zwischen dem Abfangabschnitt und dem Abschnitt mit konstanter Steigung einen dazwischenliegenden Abschnitt aufweist, der diese Höhenänderung (ΔH) berücksichtigt und

   - in Schritt d) die auf diese Weise bestimmte Ausweichflugbahn verwendet wird, um zu überprüfen, ob diese Ausweichflugbahn über die vorherbestimmte Distanz vor dem Flugzeug (A) mit dem Profil (6) des Geländes (2) vereinbar ist.

2. Verfahren nach Anspruch 1,
**dadurch gekennzeichnet, dass** die durch eine Geschwindigkeitsverringerung hervorgerufene Gesamtsteigungsänderung einer Änderung des Antriebsschubs entspricht.

3. Verfahren nach Anspruch 2,
**dadurch gekennzeichnet, dass:**

   - in Schritt b):

      • die tatsächliche Masse GW des Flugzeugs (A) berechnet wird,
      • die aktuelle Istgeschwindigkeit VO des Flugzeugs (A) gemessen wird und
      • die aktuelle tatsächliche Steigung γO des Flugzeugs (A) gemessen wird und

   - in Schritt c) die Höhenänderung (ΔH) mithilfe der folgenden Ausdrücke berechnet wird:

$$\Delta H = [K1.(VO^2 - VF^2)/2.g + (K2.(VO - VF) + K3)/ (GW - GWO)].f(x)$$

$$f(x) = f(X - XO \; ; VF; GW \; ; \gamma F - K5.\gamma O)$$

$$f(x) \in [0;1]$$

in denen:

    • K1 , K2, K3 und K5 vorgegebene, von dem Flugzeug (A) abhängige Parameter sind,
    • g die Erdbeschleunigung repräsentiert,
    • GWO einen von dem Flugzeug (A) abhängigen, vorgegebenen konstanten Wert der Masse des Flugzeugs (A) repräsentiert,
    • VF einen konstanten Wert der Geschwindigkeit repräsentiert, die der am Ende des Ausweichmanövers erreichten konstanten Geschwindigkeit entspricht, wobei dieser Wert vorgegeben und von dem Flugzeug (A) abhängig ist,
    • $\gamma F$ einen konstanten Wert der Flugsteigung repräsentiert, die der am Ende des Ausweichmanövers erreichten konstanten Flugsteigung gegenüber dem Boden entspricht, wobei dieser Wert vorgegeben und von dem Flugzeug (A) abhängig ist,
    • X die aktuelle Position des Flugzeugs (A) auf einer horizontalen Achse (OX) einer vertikalen Symmetrieebene (OXZp) des Flugzeugs (A) repräsentiert und
    • XO die Position des Flugzeugs (A) auf der horizontalen Achse (OX) der vertikalen Ebene (OXZp) zu Beginn einer Höhenänderungsphase des Ausweichmanövers repräsentiert.

**4.** Verfahren nach Anspruch 1,
**dadurch gekennzeichnet, dass** in Schritt c) die Höhenänderung ($\Delta H$) schrittweise berechnet wird durch Summieren:

    - einer ersten Höhenänderung, welche die von der Verzögerung hervorgerufene Umwandlung kinetischer Energie in potentielle Energie repräsentiert und
    - einer zweiten Höhenänderung, welche die Gesamtsteigung des betreffenden Schrittes repräsentiert.

**5.** Verfahren nach einem der vorhergehenden Ansprüche,
**dadurch gekennzeichnet, dass:**

    - in Schritt c):

        • anhand von bestimmten Istwerten von einigen der besonderen Flugparameter ein Lastvielfaches berechnet wird, das für eine Abfangphase des Ausweichmanövers repräsentativ ist und
        • das auf diese Weise berechnete Lastvielfache dazu verwendet wird, einen Abfangabschnitt der Ausweichflugbahn zu bestimmen, der die Realität bestmöglich repräsentiert und

    - in Schritt d) der auf diese Weise bestimmte Abfangabschnitt verwendet wird, um zu überprüfen, ob die Ausweichflugbahn über die vorherbestimmte Distanz vor dem Flugzeug (A) mit dem Profil (6) des Geländes (2) vereinbar ist.

**6.** Verfahren nach Anspruch 5,
**dadurch gekennzeichnet, dass:**

    - in Schritt b):

        • die tatsächliche Masse GW des Flugzeugs (A) berechnet wird und
        • die aktuelle Istgeschwindigkeit VO des Flugzeugs (A) gemessen wird und

    - in Schritt c) das Lastvielfache Nz mithilfe des folgenden Ausdrucks berechnet wird:

$$Nz = n0 + (n1.GW) + (n2.VO)$$

in dem n0, n1 und n2 vorgegebene Parameter sind.

**7.** Verfahren nach einem der Ansprüche 3 bis 6,
**dadurch gekennzeichnet, dass** mindestens einige der vorgegebenen Parameter und gegebenenfalls der konstanten Werte von der aktuellen Flugkonfiguration des Flugzeugs (A) abhängen.

**8.** Vorrichtung zur Erkennung der Gefahr einer Kollision eines Flugzeugs (A) mit dem Umgebungsgelände (2), wobei die Vorrichtung (1) Folgendes umfasst:

- ein erstes Mittel (5), dem ein Profil (6) des vor dem Flugzeug (A) liegenden Geländes (2) bekannt ist,
- ein zweites Mittel (7), um die Istwerte von besonderen Flugparametern zu bestimmen,
- ein drittes Mittel (9), um ausgehend von den Istwerten eine Ausweichflugbahn zu berechnen und um zu überprüfen, ob die Ausweichflugbahn mindestens über eine vorherbestimmte Distanz vor dem Flugzeug (A) mit dem Profil (6) des Geländes (2) vereinbar ist und
- ein viertes Mittel (13), um ein entsprechendes Warnsignal (19) auszugeben, wenn das dritte Mittel (9) eine Unvereinbarkeit detektiert,

**dadurch gekennzeichnet, dass** das dritte Mittel (9) mindestens Folgendes umfasst:

- ein erstes Element (15), um anhand von bestimmten Istwerten von einigen der besonderen Flugparameter eine Höhenänderung ($\Delta$H) des Flugzeugs (A) zu berechnen, die bedingt ist durch eine Energieübertragung und eine Gesamtsteigungsänderung, die von einer Geschwindigkeitsverringerung bei einem Ausweichmanöver hervorgerufen wird,
- ein zweites Element (16), um die von dem ersten Element (15) berechnete Höhenänderung ($\Delta$H) dazu zu verwenden, eine Ausweichflugbahn zu bestimmen, welche die Realität bestmöglich repräsentiert und
- ein drittes Element (3), um die von dem zweiten Element (16) bestimmte Ausweichflugbahn dazu zu verwenden, zu überprüfen, ob diese Ausweichflugbahn über die vorherbestimmte Distanz vor dem Flugzeug (A) mit dem Profil (6) des Geländes (2) vereinbar ist.

**9.** Vorrichtung nach Anspruch 8,
**dadurch gekennzeichnet, dass** das dritte Mittel (9) außerdem Folgendes umfasst:

- ein viertes Element (23), um anhand von bestimmten Istwerten von einigen der besonderen Flugparameter ein Lastvielfaches zu berechnen, das für eine Abfangphase des Ausweichmanövers repräsentativ ist,
- ein fünftes Element (16), um das von dem vierten Element (23) berechnete Lastvielfache dazu zu verwenden, einen Abfangabschnitt der Ausweichflugbahn zu bestimmen, der die Realität bestmöglich repräsentiert und
- ein sechstes Element (3), um diesen von dem fünften Element (16) bestimmten Abfangabschnitt dazu zu verwenden, zu überprüfen, ob die Ausweichflugbahn über die vorherbestimmte Distanz vor dem Flugzeug (A) mit dem Profil (6) des Geländes (2) vereinbar ist.

**10.** Flugzeug,
**dadurch gekennzeichnet, dass** es eine Vorrichtung (1) aufweist, die geeignet ist, das unter einem der Ansprüche 1 bis 7 spezifizierte Verfahren auszuführen.

**11.** Flugzeug,
**dadurch gekennzeichnet, dass** es eine Vorrichtung (1) wie die unter einem der Ansprüche 8 und 9 spezifizierte aufweist.

Fig. 1

Fig. 2

Fig. 3

**EP 1 907 911 B1**

## RÉFÉRENCES CITÉES DANS LA DESCRIPTION

**Documents brevets cités dans la description**

- US 20050261811 A